# EUROPEAN PATENT APPLICATION

(11) **EP 4 439 793 A1**
(43) Date of publication of application: **02.10.2024**
(21) Application number: 23183564.6
(22) Date of filing: 05.07.2023
(51) Int. Cl.: H01M 10/613, H01M 10/617, H01M 10/633, H01M 10/6568, H01M 10/48

(54) **CONTROL METHOD, DEVICE AND APPARATUS FOR LIQUID COOLING PIPELINE OF BATTERY ENERGY STORAGE SYSTEM**

(30) Priority: 31.03.2023 CN 202310345633
(71) Applicant: Cornex New Energy Co., Ltd., Xiaogan Hubei 432099 (CN)
(72) Inventor: ZHANG, Jing, Xiaogan, Hubei, 432099 (CN); WU, Xibin, Xiaogan, Hubei, 432099 (CN); ZHOU, Leijun, Xiaogan, Hubei, 432099 (CN); BU, Xiangnan, Xiaogan, Hubei, 432099 (CN); DAI, Deming, Xiaogan, Hubei, 432099 (CN)
(74) Representative: Global IP Europe Patentanwaltskanzlei

(57) **Abstract**

This present disclosure provides a control method, a device, and an apparatus for a liquid cooling pipeline of a battery energy storage system. The control method comprises: monitoring, the battery energy storage system to obtain the working mode of the battery energy storage system and a first temperature of a plurality of battery cells of any one of battery clusters in the battery energy storage system; determining, a thermal management mode to be turned on for the battery energy storage system and judging whether the battery energy storage system needs to perform a startup flow control, based on the first temperature and the working mode of the plurality of battery cells in each one of the battery clusters; and in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster. Therefore, the target battery cluster that requires flow control can be automatically identified, and the flow of the liquid cooling pipeline branch corresponding to the target battery cluster can be effectively controlled, thereby effectively improving the temperature difference between the battery clusters.

## Description

### FIELD OF INVENTION

The present disclosure relates to the field of computer technology, in particular to a control method, a device, and an apparatus for the liquid cooling pipeline of the battery energy storage system.

### BACKGROUND OF THE INVENTION

With the continuous improvement of the economy of energy storage, the energy storage plays an increasingly important role in the construction of the renewable energy power generation, the smart grid and the energy internet. The battery energy storage system is the mainstream product to realize energy storage today.

The battery energy storage system is generally composed of a plurality of battery cells, and the battery cells in the battery energy storage system have the characteristics of large capacity and high power, so as to achieve high power density. However, the advantage of high power density makes battery energy storage systems require high heat dissipation, but the problem of individual battery cell heating is prone to occur inside the battery energy storage system. Effectively controlling the temperature of the battery energy storage system can improve its service life and safety performance.

In related technologies, the coolant flow rate in the liquid cooling pipeline of the battery energy storage system can be distributed to assist in controlling the temperature of a plurality of battery cells in the battery energy storage system to achieve the requirement of uniform temperature. It is very important to control the liquid cooling pipeline of the battery energy storage system.

### SUMMARY

This present disclosure aims to solve at least one of the technical problems in the relevant technology to a certain extent.

This present disclosure provides a control method, a device, and an apparatus for a liquid cooling pipeline of a battery energy storage system, which can automatically identify the target battery cluster that requires flow control based on the working mode of the battery energy storage system and the first temperature of each one of the battery cells, and effectively control the flow of the liquid cooling pipeline branch corresponding to the target battery cluster, thereby effectively improving the temperature difference between the battery clusters.

The first embodiment of the present disclosure provides a control method for a liquid cooling pipeline of a battery energy storage system, comprising:
monitoring, the battery energy storage system to obtain the working mode of the battery energy storage system and a first temperature of a plurality of battery cells of any one of battery clusters in the battery energy storage system;
determining, a thermal management mode to be turned on for the battery energy storage system and judging whether the battery energy storage system needs to perform a startup flow control, based on the first temperature and the working mode of the plurality of battery cells in each one of the battery clusters; and
in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

In the control method for the liquid cooling pipeline of the battery energy storage system in an embodiment of the present disclosure, monitoring, the battery energy storage system to obtain the working mode of the battery energy storage system and a first temperature of a plurality of battery cells of any one of battery clusters in the battery energy storage system; determining, a thermal management mode to be turned on for the battery energy storage system and judging whether the battery energy storage system needs to perform a startup flow control, based on the first temperature and the working mode of the plurality of battery cells in each one of the battery clusters; and in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster. Therefore, it can achieve the working mode based on the battery energy storage system and the first temperature of each one of the battery cells, the target battery cluster that requires flow control can be automatically identified, and the flow of the liquid cooling pipeline branch corresponding to the target battery cluster can be effectively controlled, thereby effectively improving the temperature difference between the battery clusters.

The second embodiment of the present disclosure provides a control device for a liquid cooling pipeline of a battery energy storage system, comprising:
a first monitoring module, for monitoring the battery energy storage system to obtain an working mode of the battery energy storage system and a first temperature of a plurality of battery cells of any one of battery clusters in the battery energy storage system;
a processing module, for determining a thermal management mode to be turned on for the battery energy storage system based on the first temperature and the working mode of the plurality of battery cells of each one of the battery clusters;
a first judgment module, for judging whether the battery energy storage system needs to perform a startup flow control; and
a processing module, in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

In the control device for the liquid cooling pipeline of the battery energy storage system of an embodiment in the present disclosure, monitoring, the battery energy storage system to obtain the working mode of the battery energy storage system and a first temperature of a plurality of battery cells of any one of battery clusters in the battery energy storage system; determining, a thermal management mode to be turned on for the battery energy storage system and judging whether the battery energy storage system needs to perform a startup flow control, based on the first temperature and the working mode of the plurality of battery cells in each one of the battery clusters; and in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster. Therefore, it can achieve the working mode based on the battery energy storage system and the first temperature of each one of the battery cells, the target battery cluster that requires flow control can be automatically identified, and the flow of the liquid cooling pipeline branch corresponding to the target battery cluster can be effectively controlled, thereby effectively improving the temperature difference between the battery clusters.

The third embodiment of the present disclosure provides an electronic device, comprising a memory, a processor and a computer program stored on the memory and capable of running on the processor, when the processor executes the computer program, the control method for the liquid cooling pipeline of the battery energy storage system as provided in the first embodiment of the present disclosure is implemented.

The fourth embodiment of the present disclosure provides a non-temporary computer-readable storage medium on which a computer program is stored, when the program is executed by the processor, the control method for the liquid cooling pipeline of the battery energy storage system as provided in the first embodiment of the present disclosure is implemented.

The fifth embodiment of the present disclosure provides a computer program product, when the instructions in the computer program product are executed by a processor, executes the control method for the liquid cooling pipeline of the battery energy storage system as claimed in the first embodiment of the present disclosure.

The additional aspects and advantages of the present disclosure will be partially provided in the following description, and some will become apparent from the following description or could be learned through the practice of the present disclosure.

### BRIEF DESCRIPTION OF THE DRAWINGS

The above-mentioned and/or additional aspects and advantages of the present disclosure will become apparent and easy to understand from the description of embodiments in conjunction with the accompanying drawings, wherein:
Fig. 1 is a flowchart schematic diagram of a control method for a liquid cooling pipeline of a battery energy storage system provided in the first embodiment of the present disclosure.
Fig. 2 is a schematic diagram of a liquid cooling pipeline of a battery energy storage system provided in the present disclosure.
Fig. 3 is a flowchart schematic diagram of a control method for a liquid cooling pipeline of a battery energy storage system provided in the second embodiment of the present disclosure.
Fig. 4 is a flowchart schematic diagram of a control method for a liquid cooling pipeline of a battery energy storage system provided in the third embodiment of the present disclosure.
Fig. 5 is a flowchart schematic diagram of a control method for a liquid cooling pipeline of a battery energy storage system provided in the forth embodiment of the present disclosure.
Fig. 6 is a schematic diagram of a control system of a liquid cooling pipeline of a battery energy storage system provided in the present disclosure.
Fig. 7 is a structural schematic diagram of a control method for a liquid cooling pipeline of a battery energy storage system provided in the fifth embodiment of the present disclosure.
Fig. 8 shows a schematic block diagram of an exemplary electronic device for implementing an embodiment of the present disclosure.

### DETAILED DESCRIPTION OF THE EMBODYMENTS

The following describes the embodiments of the present disclosure in detail, examples of which are shown in the accompanying drawings, where the same or similar reference numbers throughout represent the same or similar components or components with the same or similar functions. The embodiments described below with reference to the accompanying drawings are exemplary and intended to explain the present disclosure, but cannot be understood as limiting the present disclosure.

The interior of the battery energy storage system is composed of a plurality of battery clusters in parallel connection, and each one of the battery clusters is composed of a plurality of battery modules. When controlling the liquid cooling pipeline of the battery energy storage system, the coolant flow rate in the liquid cooling pipeline is usually distributed according to the requirements of the battery temperature equalization. However, due to the fact that the liquid cooling pipeline of the battery energy storage system is designed for uniform temperature based on the full configuration of the battery modules and the consistent battery status, when faced with customized demands from different users for the capacity of the battery energy storage system, such as the need to reduce the configuration of a single or a plurality of battery modules for a certain battery cluster, or the need to expand the capacity of the battery energy storage system and so on, at this time, the cooling or heat dissipation needs of each one of the battery clusters are no longer consistent, this will affect the flow distribution in the originally designed liquid cooling pipeline on the temperature equalization of the battery cells.

In response to the above issues, the present disclosure provides a control method, a device, and an apparatus for a liquid cooling pipeline of a battery energy storage system.

The following describes the control method, the device, and the apparatus for the liquid cooling pipeline of the battery energy storage system according to the embodiment of the present disclosure with reference to the accompanying drawings.

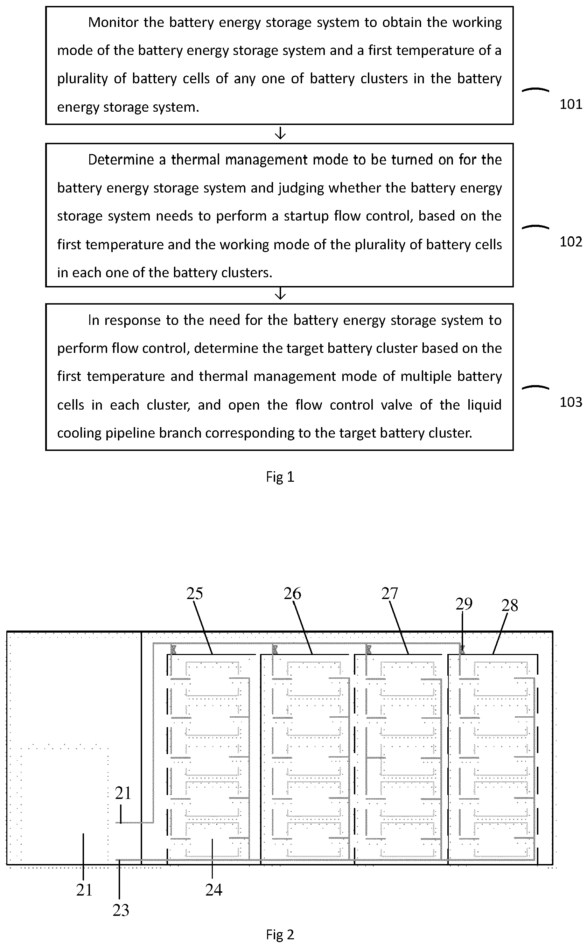

Fig. 1 is a flowchart schematic diagram of a control method for a liquid cooling pipeline of a battery energy storage system provided in the first embodiment of the present disclosure.

The embodiment of the present disclosure illustrates that the control method of the liquid cooling pipeline of the battery energy storage system is configured in the control device of the liquid cooling pipeline of the battery energy storage system. The control device of the liquid cooling pipeline of the battery energy storage system can be applied to any electronic device to enable the electronic device to perform the control function of the liquid cooling pipeline of the battery energy storage system.

Wherein the electronic devices can be any device with computing power, such as a personal computer (PC), a mobile terminal, a server and so on. The mobile terminal can be a hardware device with various operating systems, touch screens, and/or displays, such as mobile phone, tablet, personal digital assistant, wearable device and so on.

As shown in Fig. 1, the control method for the liquid cooling pipeline of the battery energy storage system comprises the following steps:
Step 101: monitoring, the battery energy storage system to obtain the working mode of the battery energy storage system and a first temperature of a plurality of battery cells of any one of battery clusters in the battery energy storage system.

In the embodiment of the present disclosure, the number of battery clusters in the battery energy storage system can be, but is not limited as one, and the present disclosure does not limit this.

In the embodiment of the present disclosure, each one of the battery clusters in the battery energy storage system comprises a plurality of battery cells. It should be noted that the number of battery cells comprised in each one of the battery clusters can be the same or can be different, and the present disclosure does not limit this.

In the embodiment of the present disclosure, the working mode comprises a standing mode, a charging mode, and a discharging mode. As a result, the working mode of the battery energy storage system can be either standing mode, charging mode, or discharging mode.

In the embodiment of the present disclosure, the battery energy storage system can be monitored to obtain the working mode of the battery energy storage system and the first temperature of any one of the battery cells of any one of the battery clusters in the battery energy storage system.

Step 102: determining, a thermal management mode to be turned on for the battery energy storage system and judging whether the battery energy storage system needs to perform a startup flow control, based on the first temperature and the working mode of the plurality of battery cells in each one of the battery clusters.

In the embodiment of the present disclosure, determining, a thermal management mode to be turned on for the battery energy storage system and judging whether the battery energy storage system needs to perform a startup flow control, based on the first temperature and the working mode of the plurality of battery cells in each one of the battery clusters.

Step 103: determining, a thermal management mode to be turned on for the battery energy storage system and judging whether the battery energy storage system needs to perform a startup flow control, based on the first temperature and the working mode of the plurality of battery cells in each one of the battery clusters.

In the embodiment of the present disclosure, any one of the battery clusters has a flow control valve corresponding to a liquid cooling pipeline branch.

As an example, the liquid cooling pipeline of the battery energy storage system is shown in Fig. 2. As shown in Fig. 2, 21 shows the liquid cooling unit, 22 shows the liquid cooling outlet pipeline, 23 shows the liquid cooling return pipeline, 24 shows the battery module (each battery module comprises a plurality of battery cells), 25 shows 1 # battery cluster, 26 shows 2 # battery cluster, 27 shows 3 # battery cluster, 28 shows 4 # battery cluster, and 29 shows the flow control valve of the liquid cooling pipeline branch corresponding to 4 # battery cluster.

In the embodiment of the present disclosure, when the battery energy storage system needs to perform the startup flow control, determining a target battery cluster based on the first temperature and the thermal management mode of the plurality of battery cells in each one of the battery clusters, and turning on a flow control valve of a liquid cooling pipeline branch corresponding to the target battery cluster.

In the control method for the liquid cooling pipeline of the battery energy storage system in an embodiment of the present disclosure, monitoring, the battery energy storage system to obtain the working mode of the battery energy storage system and a first temperature of a plurality of battery cells of any one of battery clusters in the battery energy storage system; determining, a thermal management mode to be turned on for the battery energy storage system and judging whether the battery energy storage system needs to perform a startup flow control, based on the first temperature and the working mode of the plurality of battery cells in each one of the battery clusters; and in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster. Therefore, it can achieve the working mode based on the battery energy storage system and the first temperature of each one of the battery cells, the target battery cluster that requires flow control can be automatically identified, and the flow of the liquid cooling pipeline branch corresponding to the target battery cluster can be effectively controlled, thereby effectively improving the temperature difference between the battery clusters.

In order to clearly illustrate how the thermal management mode to be turned on for the battery energy storage system is determined based on the first temperature and the working mode of a plurality of battery cells in each one of the battery clusters in the above-mentioned embodiment of the present disclosure, the present disclosure also provides a control method for the liquid cooling pipeline of the battery energy storage system.

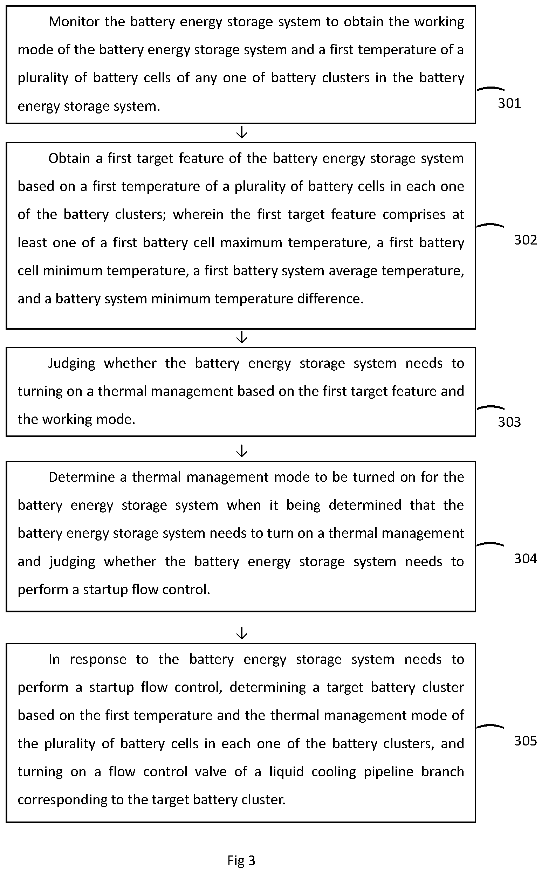

Fig. 3 is a flowchart schematic diagram of a control method for a liquid cooling pipeline of a battery energy storage system provided in the second embodiment of the present disclosure.

As shown in Fig. 3, the control method for the liquid cooling pipeline of the battery energy storage system can comprise the following steps:
Step 301: monitoring, the battery energy storage system to obtain the working mode of the battery energy storage system and a first temperature of a plurality of battery cells of any one of battery clusters in the battery energy storage system.

The execution process of step 301 can be referred to in any embodiment of the present disclosure, and will not be further described here repeatedly.

Step 302: obtaining, a first target feature of the battery energy storage system based on a first temperature of a plurality of battery cells in each one of the battery clusters; wherein the first target feature comprises at least one of a first battery cell maximum temperature, a first battery cell minimum temperature, a first battery system average temperature, and a battery system minimum temperature difference.

In the embodiment of the present disclosure, the first battery cell maximum temperature can indicate the maximum value of the first temperature of the battery cell in the battery energy storage system.

In the embodiment of the present disclosure, the first battery cell minimum temperature can indicate the minimum value of the first temperature of the battery cell in the battery energy storage system.

In the embodiment of the present disclosure, the first battery system average temperature can indicate the average value of the first temperature of the battery cell in the battery energy storage system.

In the embodiment of the present disclosure, the battery system minimum temperature difference can indicate the minimum temperature difference between the battery cells in the battery energy storage system.

In the embodiment of the present disclosure, obtaining, a first target feature of the battery energy storage system based on a first temperature of a plurality of battery cells in each one of the battery clusters; wherein the first target feature comprises at least one of a first battery cell maximum temperature, a first battery cell minimum temperature, a first battery system average temperature, and a battery system minimum temperature difference.

Step 303: judging whether the battery energy storage system needs to turning on a thermal management based on the first target feature and the working mode.

In the embodiment of the present disclosure, judging whether the battery energy storage system needs to turning on a thermal management based on the first target feature and the working mode.

As a possible implementation method, it can be judged whether the battery energy storage system meets the first setting condition based on the first target feature and the working mode; when the battery energy storage system meets the setting conditions, it can be determined that the battery energy storage system needs to turn on thermal management.

In the embodiment of the present disclosure, the first setting condition may be preset.

As an example, the first setting condition under different working modes is shown in Table 1:

**Table 1. the first setting conditions under different working modes**

| working mode | first setting condition |
|---|---|
| standing mode | first battery cell minimum temperature ≤ -20°C |
| | and first battery system average temperature ≤-10°C |
| | first battery cell maximum temperature ≥ 45°C |
| | and first battery system average temperature ≥35°C |
| | battery system minimum temperature difference ≥15°C |
| charging mode | first battery cell minimum temperature ≤ 10°C |
| | and first battery system average temperature ≤20°C |
| | first battery cell maximum temperature ≥ 45°C |
| | and first battery system average temperature ≥35 °C |
| | battery system minimum temperature difference ≥15°C |
| discharging mode | first battery cell minimum temperature ≤ 5°C |
| | and first battery system average temperature ≤15°C |
| | first battery cell maximum temperature ≥ 45°C |
| | and first battery system average temperature ≥35°C |
| | battery system minimum temperature difference ≥15°C |

As shown in Table 1, when the working mode of the battery energy storage system is in the standing mode, the battery energy storage system meets the first battery cell minimum temperature is less than or equal to -20°C and the first battery system average temperature is less than or equal to -10°C, or the first battery cell maximum temperature is greater than or equal to 45°C and the first battery system average temperature is greater than or equal to 35°C, or, the battery system minimum temperature difference is greater than or equal to 15°C, it can be determined that the battery energy storage system needs to turn on the thermal management.

When the working mode of the battery energy storage system is in the charging mode, the first battery cell minimum temperature is less than or equal to 10°C and the first battery system average temperature is less than or equal to 20°C, or the first battery cell maximum temperature is greater than or equal to 45°C and the first battery system average temperature is greater than or equal to 35°C, or the battery system minimum temperature difference is greater than or equal to 15°C, it can be determined that the battery energy storage system needs to turn on the thermal management.

When the working mode of the battery energy storage system is in the discharging mode, the first battery cell minimum temperature is less than or equal to 5 °C and the first battery system average temperature is less than or equal to 15°C, or the first battery cell maximum temperature is greater than or equal to 45°C and the first battery system average temperature is greater than or equal to 35 °C, or the battery system minimum temperature difference is greater than or equal to 15°C, it can be determined that the battery energy storage system needs to turn on the thermal management.

It should be noted that the above settings for the first setting conditions under different working modes are only exemplary. In practical applications, the first setting conditions under different working modes can be set as needed, and the present disclosure does not limit this.

Step 304: determining, a thermal management mode to be turned on for the battery energy storage system when it being determined that the battery energy storage system needs to turn on a thermal management and judging whether the battery energy storage system needs to perform a startup flow control.

It should be noted that in the present disclosure, the thermal management mode can be heating management, cooling management, or self-circulation management.

In the embodiment of the present disclosure, when it is determined that the battery energy storage system needs to turn on the thermal management, the thermal management mode of the battery energy storage system can be determined.

As a possible implementation method, when it is determined that the battery energy storage system needs to turn on the thermal management, the thermal management mode of the battery energy storage system can be determined based on the first setting condition that the battery energy storage system meets and the working mode of the battery energy storage system.

Using the above-mentioned example as an example again, the thermal management mode activated for the battery energy storage system under different working modes and the first setting condition is shown in Table 2:

**Table 2. the thermal management modes corresponding to different working modes and the first setting conditions**

| working mode | first setting condition | thermal management mode |
|---|---|---|
| standing mode | first battery cell minimum temperature ≤-20°C | heating management |
| | and first battery system average temperature ≤ -10°C | |
| | first battery cell maximum temperature ≥45°C | cooling management |
| | and first battery system average temperature & 35°C | |
| | battery system minimum temperature difference ≥15°C | self-circulation management |
| charging mode | first battery cell minimum temperature ≤10°C | heating management |
| | and first battery system average temperature ≤ 20°C | |
| | first battery cell maximum temperature ^45 °C | cooling management |
| | and first battery system average temperature & 3 5 °C | |
| | battery system minimum temperature difference ≥15°C | self-circulation management |
| discharging mode | first battery cell minimum temperature ≤5°C | heating management |
| | and first battery system average temperature ≤ 15°C | |
| | first battery cell maximum temperature ≥45°C | cooling management |
| | and first battery system average temperature ≥ 35°C | |
| | battery system minimum temperature difference ≥15°C | self-circulation management |

It should be noted that the above-mentioned examples of thermal management modes for battery energy storage systems under different working modes and the first setting conditions are only illustrative. In practical applications, the thermal management modes that are enabled can be set as needed, and the present disclosure does not limit this.

In the embodiment of the present disclosure, it can also be judged whether the battery energy storage system needs to turn on the flow control.

Step 305: in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

The execution process of step 305 can be referred to in any embodiment of the present disclosure, and will not be further described here repeatedly.

In the control method for the liquid cooling pipeline of the battery energy storage system in the embodiment of the present disclosure, obtaining, a first target feature of the battery energy storage system based on a first temperature of a plurality of battery cells in each one of the battery clusters; wherein the first target feature comprises at least one of a first battery cell maximum temperature, a first battery cell minimum temperature, a first battery system average temperature, and a battery system minimum temperature difference; judging whether the battery energy storage system needs to turning on a thermal management based on the first target feature and the working mode; and determining, a thermal management mode to be turned on for the battery energy storage system when it being determined that the battery energy storage system needs to turn on a thermal management. Therefore, the thermal management mode to be turned on for the battery energy storage system can be effectively determined based on the first target feature and the working mode of the battery energy storage system.

In any embodiment of the present disclosure, in order to clearly illustrate how to judge whether the battery energy storage system needs to perform startup flow control, the present disclosure also provides a control method for the liquid cooling pipeline of the battery energy storage system.

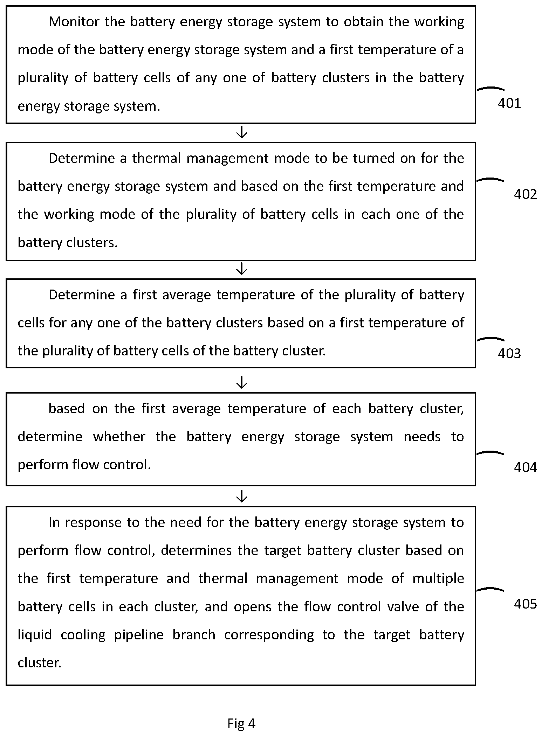

Fig. 4 is a flowchart schematic diagram of a control method for a liquid cooling pipeline of a battery energy storage system provided in the third embodiment of the present disclosure.

As shown in Fig. 4, the control method for the liquid cooling pipeline of the battery energy storage system can comprise the following steps:
Step 401: monitoring, the battery energy storage system to obtain the working mode of the battery energy storage system and a first temperature of a plurality of battery cells of any one of battery clusters in the battery energy storage system.
Step 402: determining, a thermal management mode to be turned on for the battery energy storage system and based on the first temperature and the working mode of the plurality of battery cells in each one of the battery clusters.

The execution process from step 401 to step 402 can be referred to in any embodiment of the present disclosure, and will not be further described here repeatedly.

Step 403: determining, a first average temperature of the plurality of battery cells for any one of the battery clusters based on a first temperature of the plurality of battery cells of the battery cluster.

In the embodiment of the present disclosure, determining, a first average temperature of the plurality of battery cells for any one of the battery clusters based on a first temperature of the plurality of battery cells of the battery cluster. For example, the first temperature of a plurality of battery cells in a battery cluster can be weighted and averaged to obtain the first average temperature of the battery cluster.

Step 404: judging whether the battery energy storage system needs to perform a startup flow control based on the first average temperature of each one of the battery clusters.

As a possible implementation method, judging, whether there is a first battery cluster pair in the battery energy storage system based on the first average temperature of each one of the battery clusters; wherein the first temperature difference of the first battery cluster in the first battery cluster pair is greater than or equal to a first set value; the first temperature difference indicates a difference between the first average temperatures of the first battery clusters; and in response to there is the first battery cluster pair in the battery energy storage system, determining the battery energy storage system needs to perform startup flow control.

In the embodiment of the present disclosure, the first set value can be preset, such as 10°C, 11°C, etc., and the present disclosure does not limit this.

In the embodiment of the present disclosure, the first temperature difference of the first battery cluster in the first battery cluster pair can be greater than or equal to the first set value.

Wherein the first battery cluster can be the battery cluster in the first battery cluster pair.

Wherein the first temperature difference can indicate the difference between the first average temperatures of the first battery clusters. It should be noted that the first temperature difference can be the difference between the first average temperatures of the first battery clusters, or can be the absolute value of the difference between the first average temperatures of the first battery clusters. This present disclosure does not limit this.

Therefore, in the present disclosure, it can be judged whether there is a first battery cluster pair in the battery energy storage system based on the first average temperature of each one of the battery clusters; when there is a first battery cluster pair in the battery energy storage system, it can be determined that the battery energy storage system needs to perform startup flow control.

Step 405: in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

The execution process of step 405 can be referred to in any embodiment of the present disclosure, and will not be further described here repeatedly.

In the case where the thermal management mode is determined to be the heating management, in one possible implementation method of the embodiments of the present disclosure, in response to the battery energy storage system needs to perform the startup flow control, the target battery cluster with the first average maximum temperature can be determined from each one of the battery clusters based on the first average temperature of each one of the battery clusters; and the flow control valve of the liquid cooling pipeline branch corresponding to the target battery cluster can be turned on.

As an example, in the case of determining the thermal management mode as the heating management, assuming that the battery energy storage system needs to perform startup flow control, the battery energy storage system comprises battery cluster 1, battery cluster 2, battery cluster 3, and battery cluster 4. The first average temperature of battery cluster 1 is a, the first average temperature of battery cluster 2 is b, the first average temperature of battery cluster 3 is c, and the first average temperature of battery cluster 4 is d. Based on the first average temperature of each one of the battery clusters, the target battery cluster with the first average maximum temperature can be determined from each one of the battery clusters. For example, when the target battery cluster with the first average maximum temperature is determined to be battery cluster 2, the flow control valve of the liquid cooling pipeline branch corresponding to the target battery cluster, which is battery cluster 2, can be turned on.

In the case where the thermal management mode is determined to be the cooling management, in one possible implementation of the embodiment of the present disclosure, in response to the battery energy storage system needs to perform startup flow control, the target battery cluster with the first average minimum temperature can be determined from each one of the battery clusters based on the first average temperature of each one of the battery clusters; and the flow control valve of the liquid cooling pipeline branch corresponding to the target battery cluster can be turned on.

As an example, in the case of determining the thermal management mode as the cooling management, assuming that the battery energy storage system needs to perform startup flow control, the battery energy storage system comprises battery cluster 1, battery cluster 2, battery cluster 3, and battery cluster 4. The first average temperature of battery cluster 1 is a, the first average temperature of battery cluster 2 is b, the first average temperature of battery cluster 3 is c, and the first average temperature of battery cluster 4 is d. The target battery cluster with the first average minimum temperature can be determined from each one of the battery clusters based on the first average temperature of each one of the battery clusters. For example, when the target battery cluster with the first average minimum temperature is determined to be battery cluster 4, the flow control valve of the liquid cooling pipeline branch corresponding to the target battery cluster, which is battery cluster 4, can be turned on.

In the case where the thermal management mode is determined to be the self-circulation management, in one possible implementation of the embodiment of the present disclosure, the battery energy storage system does not require subsequent flow control.

Thus, effective control of the liquid cooling pipeline of the battery energy storage system can be achieved.

In the control method for the liquid cooling pipeline of the battery energy storage system in the embodiment of the present disclosure, determining, a first average temperature of the plurality of battery cells for any one of the battery clusters based on a first temperature of the plurality of battery cells of the battery cluster; and judging, whether the battery energy storage system needs to perform a startup flow control based on the first average temperature of each one of the battery clusters. From this, it is possible to judge whether the battery energy storage system needs to perform startup flow control based on the first average temperature of each one of the battery clusters.

It can be understood that after turning on the flow control valve of the liquid cooling pipeline branch corresponding to the target battery cluster, it can also be determined whether the flow control valve of the liquid cooling pipeline branch corresponding to the target battery cluster in the battery energy storage system is turned off based on the temperature change of the battery cluster in the battery energy storage system. The following is a detailed explanation of the above process in conjunction with Fig. 4.

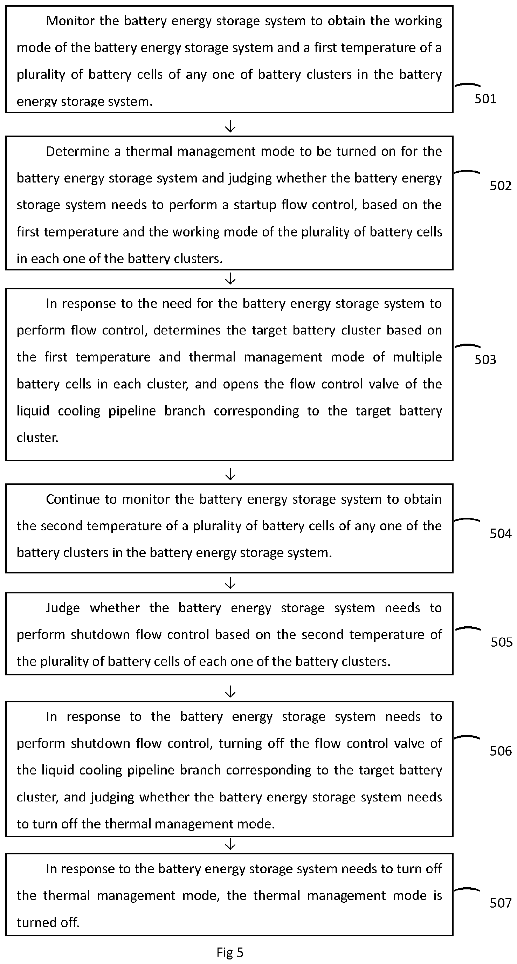

Fig. 5 is a flowchart schematic diagram of a control method for a liquid cooling pipeline of a battery energy storage system provided in the forth embodiment of the present disclosure.

As shown in Fig. 5, the control method for the liquid cooling pipeline of the battery energy storage system can comprise the following steps:
Step 501: monitoring, the battery energy storage system to obtain the working mode of the battery energy storage system and a first temperature of a plurality of battery cells of any one of battery clusters in the battery energy storage system.
Step 502: determining, a thermal management mode to be turned on for the battery energy storage system and judging whether the battery energy storage system needs to perform a startup flow control, based on the first temperature and the working mode of the plurality of battery cells in each one of the battery clusters.
Step 503: in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

The execution process of step 501 to step 503 can be referred to in any embodiment of the present disclosure, and will not be further described here repeatedly.

Step 504: continuing to monitor the battery energy storage system to obtain the second temperature of a plurality of battery cells of any one of the battery clusters in the battery energy storage system.

In the embodiment of the present disclosure, the battery energy storage system can continue to be monitored to obtain the second temperature of a plurality of battery cells of any one of the battery clusters in the battery energy storage system.

Step 505: judging whether the battery energy storage system needs to perform shutdown flow control based on the second temperature of the plurality of battery cells of each one of the battery clusters.

In the case where the thermal management mode is the heating management or the cooling management, as a possible implementation method, determining, a second average temperature of the battery cluster for any one of the battery clusters based on the second temperature of the plurality of battery cells of the battery cluster; and judging whether the battery energy storage system needs to perform shutdown flow control based on a second average temperature of each one of the battery clusters.

In the embodiment of the present disclosure, determining, a second average temperature of the battery cluster for any one of the battery clusters based on the second temperature of the plurality of battery cells of the battery cluster. For example, the second temperature of a plurality of battery cells in a battery cluster can be weighted and averaged to obtain the second average temperature of the battery cluster.

In the embodiment of the present disclosure, it can be judged whether the battery energy storage system needs to perform shutdown flow control based on the second average temperature of each one of the battery clusters.

As a possible implementation method, for any two battery clusters, obtaining, a second temperature difference for any two of the battery clusters based on a second average temperature of any two of the battery clusters; wherein the second temperature difference indicates a difference between the second average temperatures of any two of the battery clusters; and in response to each one of the second temperature differences is less than or equal to a second set value, determining the battery energy storage system needs to perform shutdown flow control.

It should be noted that the second temperature difference can be the difference between the second average temperatures of any two battery clusters, or it can also be the absolute value of the difference between the second average temperatures of any two battery clusters. This present disclosure does not limit this.

In the embodiment of the present disclosure, the second set value can be preset, such as 5°C, 6°C, etc., and the present disclosure does not limit this.

In the embodiment of the present disclosure, obtaining, a second temperature difference for any two of the battery clusters based on a second average temperature of any two of the battery clusters, when the second temperature difference is less than or equal to the second set value, it can be determined that the battery energy storage system needs to perform shutdown flow control.

It can be understood that when the thermal management mode is determined to be self-cycling management, when the battery energy storage system does not need to perform activate flow control, correspondingly, the battery energy storage system does not need to perform shutdown flow control.

Step 506: in response to the battery energy storage system needs to perform shutdown flow control, turning off the flow control valve of the liquid cooling pipeline branch corresponding to the target battery cluster, and judging whether the battery energy storage system needs to turn off the thermal management mode.

In the embodiment of the present disclosure, when it is jugded that the battery energy storage system needs to perform shutdown flow control, the flow control valve of the liquid cooling pipeline branch corresponding to the target battery cluster can be turned off, and it can be judged whether the battery energy storage system needs to turn off the thermal management mode.

In order to clarify how to judge whether the battery energy storage system needs to turn off the thermal management mode, in one possible implementation of the embodiment of the present disclosure, obtaining, a second target feature of the battery energy storage system based on a second temperature of the plurality of battery cells of each one of the battery clusters; wherein, the second target feature includes at least one of a second battery cell maximum temperature, a second battery cell minimum temperature, a second battery system average temperature, and a battery system maximum temperature difference; and judging whether the battery energy storage system needs to turn off the thermal management mode based on the second target feature, the thermal management mode, and the working mode.

In the embodiment of the present disclosure, the second battery cell maximum temperature can indicate the maximum value of the second temperature of the battery cell in the battery energy storage system.

In the embodiment of the present disclosure, the second battery cell minimum temperature can indicate the minimum value of the second temperature of the battery cell in the battery energy storage system.

In the embodiment of the present disclosure, the second battery system average temperature can indicate the average value of the second temperature of the battery cell in the battery energy storage system.

In the embodiment of the present disclosure, the battery system maximum temperature difference can indicate the maximum temperature difference between the battery cells in the battery energy storage system.

Therefore, in the present disclosure, the second target feature of the battery energy storage system can be obtained based on the second temperature of a plurality of battery cells in each one of the battery clusters; wherein the second target feature includes at least one of a second battery cell maximum temperature, a second battery cell minimum temperature, a second battery system average temperature, and a battery system maximum temperature difference.

In the embodiment of the present disclosure, it can be judged whether the battery energy storage system needs to turn off the thermal management mode based on the second target feature, the thermal management mode, and the working mode.

As a possible implementation method, the second setting condition corresponding to the thermal management mode and the working mode can be determined based on the thermal management mode and the working mode; and based on the second target feature, it can be judged whether the battery energy storage system meets the second setting condition corresponding to the thermal management mode and the working mode; when the battery energy storage system meets the second setting condition corresponding to the thermal management mode and the working mode, it can be determined that the battery energy storage system needs to turn off the thermal management mode.

In the embodiment of the present disclosure, the second setting condition can be preset.

In the embodiment of the present disclosure, the thermal management mode and the working mode can have corresponding second setting conditions, and the corresponding relationship between the thermal management mode, the working mode, and the second setting condition can be established in advance. Therefore, after determining the thermal management mode and the working mode, the second setting condition corresponding to the thermal management mode and the working mode can be determined by querying the above corresponding relationship.

As an example, the second setting condition corresponding to the thermal management mode and the working mode is shown in Table 3:

**Table 3. the second setting condition corresponding to the thermal management mode and the working mode**

| working mode | thermal management mode | second setting condition |
|---|---|---|
| standing mode | heating management | second battery cell minimum temperature ≥-5 °C |
| | | and second battery cell average temperature ≥5°C |
| | cooling management | second battery cell maximum temperature ≤35°C |
| | | and second battery system average temperature ≤25°C |
| | self-circulation management | battery system maximum temperature difference ≤10°C |
| charging mode | heating management | second battery cell minimum temperature ≥5°C |
| | | and second battery system average temperature ≥15°C |
| | cooling management | second battery cell maximum temperature ≤35°C |
| | | and second battery system average |
| | | temperature ≤25°C |
| | self-circulation management | battery system maximum temperature difference ≤10°C |
| discharging mode | heating management | second battery cell minimum temperature ≥0°C |
| | | and second battery system average temperature ≥10°C |
| | cooling management | second battery cell maximum temperature ≤35°C |
| | | and second battery system average temperature ≤25°C |
| | self-circulation management | battery system maximum temperature difference ≤10°C |

It should be noted that the above examples of the second setting conditions corresponding to the thermal management mode and the working mode are only illustrative. In practical applications, the second setting conditions corresponding to the thermal management mode and the working mode can be set as needed, and the present disclosure does not limit this.

As an example, assuming the working mode is the charging mode and the thermal management mode is the cooling management, the corresponding second setting condition can be determined as the second battery cell maximum temperature is less than or equal to 35 °C, and the second battery system average temperature is less than or equal to 25°C based on the above working mode and thermal management mode; when it is judged that the battery energy storage system meets the second setting condition based on the second target feature, it can be determined that the battery energy storage system needs to turn off the thermal management mode.

Step 507: in response to the battery energy storage system needs to turn off the thermal management mode, the thermal management mode is turned off.

In the embodiment of the present disclosure, when the battery energy storage system needs to turn off the thermal management mode, the thermal management mode can be turned off.

In the control method for the liquid cooling pipeline of the battery energy storage system in the embodiment of the present disclosure, continuing to monitor the battery energy storage system to obtain a second temperature of a plurality of battery cells of any one of the battery clusters in the battery energy storage system; judging whether the battery energy storage system needs to perform shutdown flow control based on the second temperature of the plurality of battery cells of each one of the battery clusters.

in response to the battery energy storage system needs to perform shutdown flow control, turning off the flow control valve of the liquid cooling pipeline branch corresponding to the target battery cluster, and judging whether the battery energy storage system needs to turn off the thermal management mode; and in response to the battery energy storage system needs to turn off the thermal management mode, turning off the thermal management mode. From this, it is possible to effectively control the flow rate of the liquid cooling pipeline branch of the battery energy storage system based on the working mode, thermal management mode, and the second temperature of each one of the battery cells of the battery energy storage system.

In order to clearly illustrate the above embodiments of the present disclosure, the following will provide a detailed explanation in conjunction with examples.

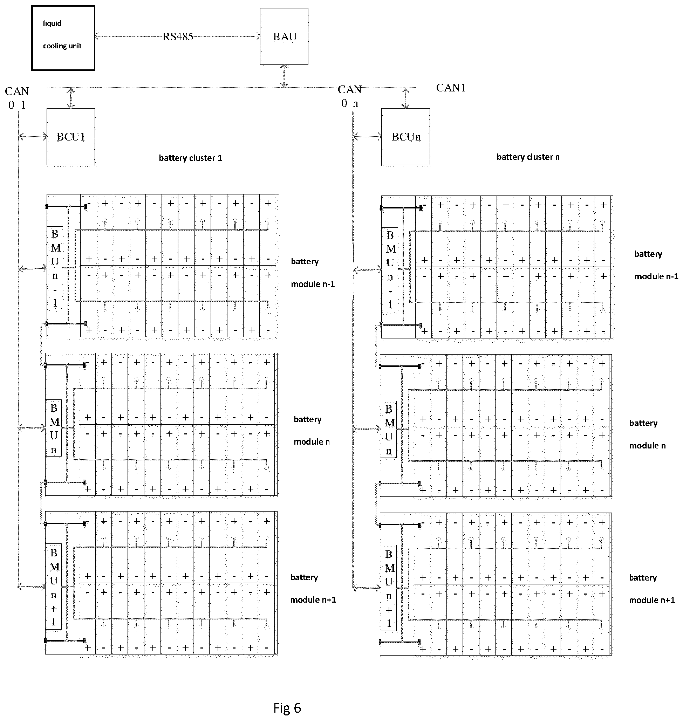

As an application scenario, the control method of the liquid cooling pipeline of the battery energy storage system disclosed in the present disclosure is applied to a control system of the liquid cooling pipeline of the battery energy storage system as an example. The control system of the liquid cooling pipeline of the battery energy storage system is shown in Fig. 6, and the control system of the liquid cooling pipeline of the battery energy storage system can comprise a liquid cooling unit, a BAU (Battery Array Unit), a BCU (Battery Control Unit), and a BMU (Battery Management Unit).

Firstly, in the control system of the liquid cooling pipeline of the battery energy storage system, obtaining the first temperatures of a plurality of battery cells of any one of the battery clusters in the battery energy storage system via BAU, and Tₘₐₓ₁ (denoted as the first battery cell maximum temperature in the present disclosure), Tₘᵢₙ₁ (denoted as the first battery cell minimum temperature in the present disclosure), T_{avg1} (denoted as the first battery system average temperature in the present disclosure), and T _{diff-min} (denoted as the battery system minimum temperature difference in the present disclosure) can be determined based on the first temperatures of a plurality of battery cells in each one of the battery clusters.

Secondly, it can be judged whether the battery energy storage system meets the first setting condition based on the above Tₘₐₓ₁, Tₘᵢₙ₁, T_{avg1}, and T _{diff-min}, as shown in Table 1; if the first setting condition is met, it is determined that the battery energy storage system needs to perform the activation thermal management; and the activation thermal management mode can be determined based on the working mode and the met first setting condition of the battery energy storage system, as shown in Table 2.

During the process of activation thermal management, for any battery cluster, the T_{c-avg1} (denoted as the first average temperature in the present disclosure) of the battery cluster can be obtained through BAU calculation based on the first temperatures of a plurality of battery cells in the cluster; it can be judged whether there is a first battery cluster pair in the battery energy storage system based on the T_{c-avg1} of each one of the battery clusters; wherein the first temperature difference of the first battery cluster in the first battery cluster pair is greater than or equal to the first set value (such as 10°C). The first temperature difference can indicate the difference between the T_{c-avg1} of the first battery cluster; in response to there is the first battery cluster pair in the battery energy storage system, it can be determined that the battery energy storage system needs to perform startup flow control.

Then, when the thermal management mode is determined to be the heating management, in response to the battery energy storage system needs to perform startup flow control, BAU can determine the target battery cluster with the largest T_{c-avg1} from each one of the battery clusters based on the T_{c-avg1} of each one of the battery clusters; and CAN (Controller Area Network) commands can be sent to BCU to turn on the flow control valve of the liquid cooling pipeline branch corresponding to the target battery cluster.

When the thermal management mode is determined to be the cooling management, in response to the battery energy storage system needs to perform startup flow control, BAU can determine the target battery cluster with the smallest T_{c-avg1} from each one of the battery clusters based on the T_{c-avg1} of each one of the battery clusters; and CAN commands can be sent to the BCU to turn on the flow control valve of the liquid cooling pipeline branch corresponding to the target battery cluster.

When the thermal management mode is determined to be the self-cycling management, the battery energy storage system does not need to perform subsequent flow control.

Correspondingly, after turn on the flow control valve of the liquid cooling pipeline branch corresponding to the target battery cluster, the battery energy storage system can continue to be monitored to obtain the second temperatures of a plurality of battery cells of any one of the battery clusters in the battery energy storage system; for any battery cluster, the T_{c-avg2} (denoted as the second average temperature in the present disclosure) of the battery cluster can be obtained through BAU calculation based on the second temperatures of a plurality of battery cells in the battery cluster; for any two battery clusters, the second temperature difference can be obtained based on the T_{c-avg2} of any two battery clusters; wherein the second temperature difference can indicate the difference of T_{c-avg2} between any two battery clusters; when each one of the second temperature difference is less than or equal to the second set value (such as 5°C), it can be determined that the battery energy storage system needs to perform shutdown flow control.

Secondly, in response to the battery energy storage system needs to perform shutdown flow control, the flow control valve of the liquid cooling pipeline branch corresponding to the target battery cluster can be turned off, and it can be judged whether the battery energy storage system needs to turn off the thermal management mode.

Specifically, Tₘₐₓ₂ (denoted as the second battery cell maximum temperature in the present disclosure), Tₘᵢₙ₂ (denoted as the second battery cell minimum temperature in the present disclosure), T_{avg2} (denoted as the second battery system average temperature in the present disclosure), and T_{diff} max (denoted as the battery system maximum temperature difference in the present disclosure) are obtained through BAU calculation based on the second temperatures of a plurality of battery cells in each one of the battery clusters. The second setting condition corresponding to the thermal management mode and working mode can be determined based on the thermal management method and working mode, as shown in Table 3; and it can be judged whether the battery energy storage system meets the second setting condition corresponding to the thermal management mode and the working mode based on the second target feature; when the battery energy storage system meets the second setting condition corresponding to the thermal management mode and the working mode, it can be determined that the battery energy storage system needs to turn off the thermal management mode.

Finally, in response to the battery energy storage system needs to turn off the thermal management mode.

It should be noted that when the thermal management mode is determined to be the self-cycling management, the battery energy storage system does not need to perform the startup flow control. Correspondingly, the battery energy storage system does not need to perform shutdown flow control, it only needs to turn off the corresponding thermal management mode when it is judged that the battery energy storage system needs to turn off the thermal management method.

The control method for the liquid cooling pipeline of the battery energy storage system in the present disclosure can effectively solve the problem of temperature difference between different battery clusters; and it can shorten the startup time of thermal management, assist in improving thermal management efficiency, reducing power consumption of the battery energy storage system, and improving energy conversion efficiency.

In summary, the control method for the liquid cooling pipeline of the battery energy storage system in the present disclosure can judge the target battery cluster that warms too fast during the heating process or cools too fast during the cooling process through real-time control of the flow distribution of the liquid cooling pipeline branch. It can also reduce the flow rate of the liquid cooling pipeline branch corresponding to the target battery cluster, improve the temperature difference between the battery clusters in the entire battery system, and effectively shorten the thermal management time.

Corresponding to the control method of the liquid cooling pipeline of the battery energy storage system provided in the embodiments in Figs. 1 to 5 above, the present disclosure also provides a control device for the liquid cooling pipeline of the battery energy storage system. The control device of the liquid cooling pipeline of the battery energy storage system provided in the present disclosure embodiment corresponds to the control method of the liquid cooling pipeline of the battery energy storage system provided in the embodiments in Figs. 1 to 5 above, therefore, the implementation method of the control method for the liquid cooling pipeline of the battery energy storage system is also applicable to the control device of the liquid cooling pipeline of the battery energy storage system provided in the embodiment of the present disclosure, and will not be described in detail in the embodiment of the present disclosure.

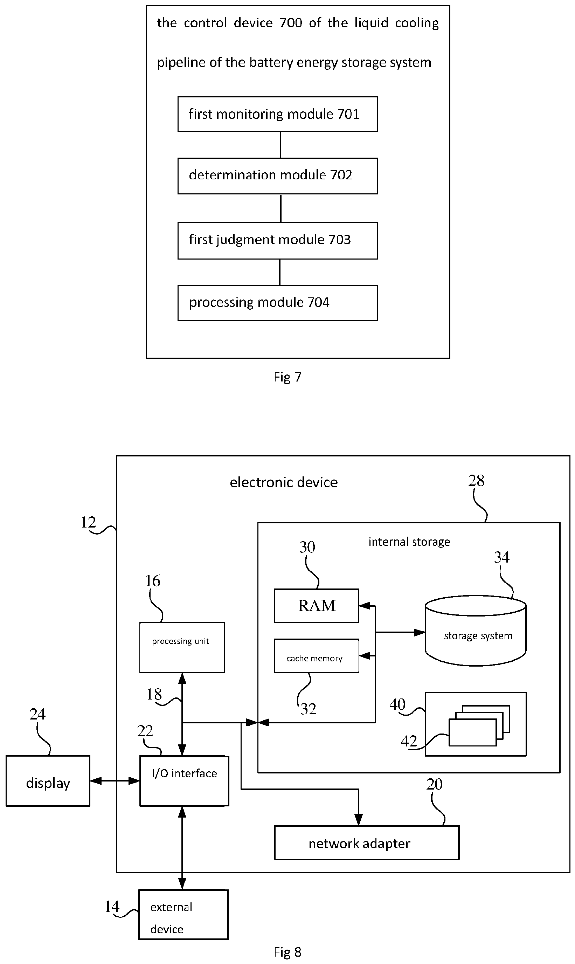

Fig. 7 is a structural schematic diagram of the control device for the liquid cooling pipeline of the battery energy storage system provided in fifth embodiment of the present disclosure.

As shown in Fig. 7, the control device 700 of the liquid cooling pipeline of the battery energy storage system can comprise: a first monitoring module 701, a determination module 702, a first judgment module 703, and a processing module 704.

Wherein the first monitoring module 701 monitors the battery energy storage system to obtain the working mode of the battery energy storage system and the first temperature of a plurality of battery cells of any one of the battery clusters in the battery energy storage system.

The determination module 702 is used to determine the activation thermal management mode for the battery energy storage system based on the first temperature and the working mode of a plurality of battery cells in each one of the battery clusters.

The first judgment module 703 is used to determine whether the battery energy storage system needs to perform startup flow control.

The processing module 704 is used to perform startup flow control in response to the needs of the battery energy storage system, determine the target battery cluster based on the first temperature and the thermal management mode of a plurality of battery cells in each one of the battery clusters, and turn on the flow control valve of the liquid cooling pipeline branch corresponding to the target battery cluster.

In a possible implementation of the embodiment of the present disclosure, the determination module 702 is used to obtain the first target feature of the battery energy storage system based on the first temperature of a plurality of battery cells in each one of the battery clusters; wherein the first target feature comprises at least one of the first battery cell maximum temperature, the first battery cell minimum temperature, the first battery system average temperature, and the battery system minimum temperature difference; and determines whether the battery energy storage system needs to turn on the thermal management based on the first target feature and the working mode; and determines the thermal management mode for the battery energy storage system when it is determined that the battery energy storage system needs to turn on the thermal management mode.

In a possible implementation of the embodiment of the present disclosure, the judgment module 703 is used to determine the first average temperature of the battery cluster based on the first temperature of a plurality of battery cells of the battery cluster; and determine whether the battery energy storage system needs to perform startup flow control based on the first average temperature of each one of the battery clusters.

In a possible implementation of the embodiment of the present disclosure, the judgment module 702 is used to determine whether there is a first battery cluster pair in the battery energy storage system based on the first average temperature of each one of the battery clusters; wherein the first temperature differences of the first battery clusters in the first battery cluster pair is greater than or equal to the first set value; the first temperature difference indicates the difference between the first average temperatures of the first battery clusters; in response to there is the first battery cluster pair in the battery energy storage system, it is determined that the battery energy storage system needs to perform startup flow control.

In a possible implementation of the embodiment of the present disclosure, the thermal management mode comprises a heating management; the processing module 704 is used to determine the target battery cluster with the first average maximum temperature from each one of the battery clusters based on the first average temperature of each one of the battery clusters; and turn on the flow control valve of the liquid cooling pipeline branch corresponding to the target battery cluster.

In a possible implementation of the embodiment of the present disclosure, the thermal management method comprises a cooling management; the processing module 704 is used to determine the target battery cluster with the first average smallest temperature from each one of the battery clusters based on the first average temperature of each one of the battery clusters; and turn on the flow control valve of the liquid cooling pipeline branch corresponding to the target battery cluster.

In a possible implementation of the embodiment of the present disclosure, the control device 700 of the liquid cooling pipeline of the battery energy storage system can further comprise:
a second monitoring module for continuing monitoring the battery energy storage system to obtain the second temperature of a plurality of battery cells of any one of the battery clusters in the battery energy storage system;
a second judgment module for determining whether the battery energy storage system needs to perform shutdown flow control based on the second temperature of a plurality of battery cells in each one of the battery clusters;
a first shutdown module for turning off the flow control valve of the liquid cooling pipeline branch corresponding to the target battery cluster in response to the battery energy storage system needs to perform shutdown flow control;
a third judgment module for determining whether the battery energy storage system needs to turn off the thermal management mode; and
a second shutdown module for turning off the thermal management mode in response to the battery energy storage system needs to turn off the thermal management mode.

In a possible implementation of the embodiment of the present disclosure, the thermal management mode comprises a heating management or a cooling management; the second judgment module is used to determine the second average temperature of a battery cluster based on the second temperature of a plurality of battery cells of the battery cluster; and determine whether the battery energy storage system needs to perform shutdown flow control based on the second average temperature of each one of the battery clusters.

In a possible implementation of the embodiment of the present disclosure, the second judgment module is used to obtain a second temperature difference for any two battery clusters based on the second average temperature of any two battery clusters; wherein the second temperature difference indicates the difference between the second average temperatures of any two battery clusters; in response to each second temperature difference being less than or equal to the second set value, it is determined that the battery energy storage system needs to perform shutdown flow control.

In a possible implementation of the embodiment of the present disclosure, the second judgment module is used to obtain the second target feature of the battery energy storage system based on the second temperature of a plurality of battery cells in each one of the battery clusters; wherein the second target feature comprises at least one of the second battery cell maximum temperature, the second battery cell minimum temperature, the second battery system average temperature, and the battery system maximum temperature difference; and determines whether the battery energy storage system needs to turn off the thermal management mode based on the second target feature, the thermal management mode, and the working mode.

In a possible implementation of the embodiment of the present disclosure, the thermal management method comprises a self-cycling management.

In the control device for the liquid cooling pipeline of the battery energy storage system in the embodiment of the present disclosure, monitoring the battery energy storage system to obtain the working mode of the battery energy storage system and the first temperature of a plurality of battery cells of any one of the battery clusters in the battery energy storage system; determining the thermal management mode to be turned on for the battery energy storage system based on the first temperature and the working mode of a plurality of battery cells in each one of the battery clusters, and determining whether the battery energy storage system needs to perform the startup flow control; in response to the battery energy storage system needs to perform the startup flow control, the target battery cluster is determined based on the first temperature and the thermal management mode of a plurality of battery cells in each one of the clusters, and turn on the flow control valve of the liquid cooling pipeline branch corresponding to the target battery cluster. Therefore, based on the working mode of the battery energy storage system and the first temperature of each one of the battery cells, it can automatically identify the target battery cluster that requires the flow control, and effectively control the flow of the liquid cooling pipeline branch corresponding to the target battery cluster, effectively improving the temperature difference between the battery clusters.

In order to implement the above-mentioned embodiments, the present disclosure further provides an electronic device, comprising a memory, a processor, and a computer program stored on the memory and capable of running on the processor, when the processor executes the computer program, the control method for the liquid cooling pipeline of the battery energy storage system as provided in any one of the above-mentioned embodiments of the present disclosure is implemented.

In order to implement the above-mentioned embodiments, the present disclosure further provides a non-temporary computer-readable storage medium on which a computer program is stored, when the program is executed by the processor, the control method for the liquid cooling pipeline of the battery energy storage system as provided in any one of the above-mentioned embodiments of the present disclosure is implemented.

In order to implement the above-mentioned embodiments, the present disclosure further provides a computer program product, when the instructions in the computer program product are executed by a processor, executes the control method for the liquid cooling pipeline of the battery energy storage system as claimed in any one of the embodiments of the present disclosure.

According to the embodiments of the present disclosure, the present disclosure further provides an electronic device, a non-temporary computer-readable storage medium, and a computer program product.

As shown in Fig. 8, the electronic device 12 is represented in a form of an universal computing device. The components of electronic device 12 may comprise, but are not limited to: one or more processors or the processing units 16, the system memory 28, and the bus 18 connecting different system components (comprising the system memory 28 and the processing units 16).

The bus 18 represents one or more of several types of bus structures, and comprises memory bus or memory controller, peripheral bus, accelerated graphic port, processor, or local bus using any of the various bus structures. For example, these architectures comprise but are not limited to industry standard architecture (hereinafter referred to as ISA) bus, micro channel architecture (hereinafter referred to as MAC) bus, enhanced industry standard architecture bus, video electronics standards association (hereinafter referred to as VESA) local bus and peripheral component interconnection (hereinafter referred to as PCI) bus.

The electronic device 12 typically comprises various computer system readable media. These media can be any available media that can be accessed by the electronic devices 12, and comprise volatile and non-volatile media, movable and immovable media.

The memory 28 may comprise computer system readable media in a form of volatile memory, such as random access memory (hereinafter referred to as RAM) 30 and/or cache memory 32. The electronic device 12 may further comprise other removable/non-removable, volatile/non-volatile computer system storage media. As an example, the storage system 34 can be used to read and write non removable, non-volatile magnetic media (not shown in Fig. 8, commonly referred to as "hard drive"). Although not shown in Fig. 8, disk drives can be provided for reading and writing removable and non-volatile disk (hereinafter referred to as "floppy disks"), as well as optical drive for reading and writing removable and non-volatile disk (such as: Compact Disc Read Only Memory (hereinafter referred to as CD-ROM), Digital Video Disc Read Only Memory (hereinafter referred to as DVD-ROM), or other optical media). In these cases, each drive can be connected to the bus 18 through one or more data medium interfaces. The memory 28 may comprise at least one program product, the program product has a set (such as, at least one) of program modules configured to perform the functions of various embodiments of the present disclosure.

A program/utility 40 with a set (or at least one) of program modules 42 may be stored, for example, in the memory 28. Such program modules 42 comprise, but are not limited to, an operating system, one or more application programs, other program modules, and program data, and each or some combination of these examples may comprise an implementation of a network environment. The program module 42 usually performs the functions and/or methods described in the embodiments of the present disclosure.

The electronic device 12 can also communicate with one or more external devices 14 (such as keyboard, pointing device, display 24, etc.), and can also communicate with one or more devices that enable users to interact with electronic device 12, and/or communicate with any device (such as a network card, modem, etc.) that enables electronic device 12 to communicate with one or more other computing devices. This communication can be carried out through input/output (I/O) interface 22. Moreover, the electronic device 12 can communicate with one or more networks, such as Local Area Network (hereinafter referred to as LAN), Wide Area Network (hereinafter referred to as WAN), and/or public network, such as the Internet, through network adapter 20. As shown in the figures, network adapter 20 communicates with other modules of the electronic device 12 through the bus 18. It should be understood that although not shown in the figures, other hardware and/or software modules can be used in conjunction with electronic device 12, and comprise but not limited to microcode, device driver, redundant processing unit, external disk drive array, RAID system, tape drive, and data backup storage system.

The processing unit 16 executes various functional applications and data processing by running programs stored on the system memory 28, such as implementing the methods mentioned in the above-mentioned embodiments.

In the description of this specification, the referenced terms "one embodiment", "some embodiments", "examples", "specific examples", or "some examples" mean that the specific features, structures, materials, or features described in conjunction with the embodiment or example are comprised in at least one embodiment or example of the present disclosure. In this specification, the schematic expressions of the above terms do not necessarily refer to the same embodiments or examples. Moreover, the specific features, structures, materials, or features described can be combined in an appropriate manner in any one or more embodiments or examples. In addition, those skilled in the art may combine and combine the different embodiments or examples described in this specification, as well as the features of different embodiments or examples, without mutual contradiction.

In addition, the terms "first" and "second" are only used to describe the purpose and cannot be understood as indicating or implying relative importance or implying the quantity of technical features indicated. Therefore, features limited to "first" and "second" can explicitly or implicitly comprise at least one of these features. In the description of the present disclosure, "multiple" means at least two, such as two, three, etc., unless otherwise specifically defined.

Any process or method description in a flowchart or otherwise described herein can be understood as representing a module, fragment, or part of code that comprises one or more executable instructions for implementing steps of a custom logic function or process, and the scope of preferred embodiments of the present disclosure comprises other implementations, which may not be in the order shown or discussed. This comprises performing functions in a substantially simultaneous manner or in reverse order based on the functions involved, which should be understood by those skilled in the technical field to which the embodiments of the present disclosure belong.

The logic and/or steps represented in a flowchart or otherwise described herein, such as a fix sequence ordered list of executable instructions that can be considered to implement logical functions, can be specifically implemented in any computer-readable medium for use by or in conjunction with instruction execution systems, devices, or devices(such as computer-based systems, systems comprising processors, or other systems that can fetch and execute instructions from instruction execution systems, devices, or devices). For the purpose of this manual, "computer readable medium" can be any device that can contain, store, communicate, propagate, or transmit programs for use by or in conjunction with instruction execution systems, devices, or devices. More specific examples of computer-readable media (non-exhaustive list) comprise the following: electrical connection units (electronic devices) with one or more wiring, portable computer cartridges (magnetic devices), random access memory (RAM), read-only memory (ROM), erasable programmable read-only memory (EPROM or flash memory), fiber optic devices, and portable optical read-only memory (CDROM). In addition, the computer-readable medium can even be paper or other suitable medium on which the program can be printed, because the program can be obtained electronically, for example, by optical scanning the paper or other medium, then editing, interpreting, or processing in other suitable methods when necessary, and then stored in computer memory.

It should be understood that various parts of the present disclosure can be implemented using hardware, software, firmware, or a combination of them. In the above embodiments, multiple steps or methods can be implemented using software or firmware stored in memory and executed by a suitable instruction execution system. For example, if implemented in hardware, as in another embodiment, it can be achieved using any of the following well-known techniques in the art or a combination of them: discrete logic circuits with logic gates for implementing logic functions on data signals, specialized integrated circuits with suitable combination logic gates, programmable gate arrays (PGA), field programmable gate arrays (FPGA) and so on.

Ordinary technical personnel in this field can understand that all or part of the steps carried by implementing the above embodiments can be completed by instructing the relevant hardware through a program, which can be stored in a computer-readable storage medium. The program comprises one or a combination of the steps of the method embodiments when executed.

In addition, each functional unit in each embodiment of the invention can be integrated in a processing module, or each unit can exist physically independently, or two or more units can be integrated in a module. The aforementioned integrated modules can be implemented in both hardware and software functional modules. If the integrated module is implemented in the form of a software functional module and sold or used as an independent product, it can also be stored in a computer readable storage medium.

The storage media mentioned above can be read-only memory, magnetic disk, or optical disc, etc. Although embodiments of the present disclosure have been shown and described above, it can be understood that the above embodiments are exemplary and cannot be understood as limitations to the present disclosure. Ordinary technical personnel in the art can make changes, modifications, substitutions, and variations to the above embodiments within the scope of the present disclosure.

## Claims

1. A control method for a liquid cooling pipeline of a battery energy storage system, comprising:
monitoring, the battery energy storage system to obtain the working mode of the battery energy storage system and a first temperature of a plurality of battery cells of any one of battery clusters in the battery energy storage system;
determining, a thermal management mode to be turned on for the battery energy storage system and judging whether the battery energy storage system needs to perform a startup flow control, based on the first temperature and the working mode of the plurality of battery cells in each one of the battery clusters; and
in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

2. The method according to claim 1, wherein the step of determining a thermal management mode to be turned on for the battery energy storage system, based on the first temperature and the working mode of the plurality of battery cells in each one of the battery clusters, comprises:
obtaining, a first target feature of the battery energy storage system based on a first temperature of a plurality of battery cells in each one of the battery clusters; wherein the first target feature comprises at least one of a first battery cell maximum temperature, a first battery cell minimum temperature, a first battery system average temperature, and a battery system minimum temperature difference;
judging, whether the battery energy storage system needs to turning on a thermal management based on the first target feature and the working mode; and
determining, a thermal management mode to be turned on for the battery energy storage system when it being determined that the battery energy storage system needs to turn on a thermal management.

3. The method according to claim 1, wherein the step of judging whether the battery energy storage system needs to perform a startup flow control, comprises:
determining, a first average temperature of the plurality of battery cells for any one of the battery clusters based on a first temperature of the plurality of battery cells of the battery cluster; and
judging, whether the battery energy storage system needs to perform a startup flow control based on the first average temperature of each one of the battery clusters.

4. The method according to claim 3, wherein the step of judging whether the battery energy storage system needs to perform a startup flow control based on the first average temperature of each one of the battery clusters, comprises:
judging, whether there is a first battery cluster pair in the battery energy storage system based on the first average temperature of each one of the battery clusters; wherein the first temperature differences of the first battery clusters in the first battery cluster pair is greater than or equal to a first set value; the first temperature difference indicates a difference between the first average temperatures of the first battery clusters; and
in response to there is the first battery cluster pair in the battery energy storage system, determining the battery energy storage system needs to perform startup flow control.

5. The method according to claim 4, wherein the thermal management mode comprises a heating mode;
the step of determining a target battery cluster based on the first temperature and the thermal management mode of the plurality of battery cells in each one of the battery clusters, and turning on a flow control valve of a liquid cooling pipeline branch corresponding to the target battery cluster comprises:
determining a target battery cluster with first average maximum temperature from each one of the battery clusters based on a first average temperature of each one of the battery clusters; and
turning on the flow control valve of a liquid cooling pipeline branch corresponds to the target battery cluster.

6. The method according to claim 4, wherein the thermal management mode comprises a cooling mode;
the step of determining a target battery cluster based on the first temperature and the thermal management mode of the plurality of battery cells in each one of the battery clusters, and turning on a flow control valve of a liquid cooling pipeline branch corresponding to the target battery cluster, comprises:
determining, a target battery cluster with first average minimum temperature from each one of the battery clusters based on the first average temperature of each one of the battery clusters; and
turning on the flow control valve of a liquid cooling pipeline branch corresponding to the target battery cluster.

7. The method according to claim 4, wherein after the step of turning on the flow control valve of a liquid cooling pipeline branch corresponding to the target battery cluster, the method further comprises:
continuing to monitor the battery energy storage system to obtain a second temperature of a plurality of battery cells of any one of the battery clusters in the battery energy storage system;
judging whether the battery energy storage system needs to perform shutdown flow control based on the second temperature of the plurality of battery cells of each one of the battery clusters;
in response to the battery energy storage system needs to perform shutdown flow control, turning off the flow control valve of the liquid cooling pipeline branch corresponding to the target battery cluster, and judging whether the battery energy storage system needs to turn off the thermal management mode; and
in response to the battery energy storage system needs to turn off the thermal management mode, turning off the thermal management mode.

8. The method according to claim 7, wherein the thermal management mode comprises a heating management or a cooling management;
the step of judging whether the battery energy storage system needs to perform shutdown flow control based on the second temperature of the plurality of battery cells of each one of the battery clusters includes:
determining, a second average temperature of the battery cluster for any one of the battery clusters based on the second temperature of the plurality of battery cells of the battery cluster; and
judging whether the battery energy storage system needs to perform shutdown flow control based on a second average temperature of each one of the battery clusters.

9. The method according to claim 8, wherein
the step of judging whether the battery energy storage system needs to perform shutdown flow control based on the second temperature of each one of the battery clusters includes:
obtaining, a second temperature difference for any two of the battery clusters based on a second average temperature of any two of the battery clusters; wherein the second temperature difference indicates a difference between the second average temperatures of any two of the battery clusters; and
in response to each one of the second temperature differences is less than or equal to a second set value, determining the battery energy storage system needs to perform shutdown flow control.

10. The method according to claim 7, wherein
the step of judging whether the battery energy storage system needs to turn off the thermal management mode includes:
obtaining, a second target feature of the battery energy storage system based on a second temperature of the plurality of battery cells of each one of the battery clusters; wherein, the second target feature includes at least one of a second battery cell maximum temperature, a second battery cell minimum temperature, a second battery system average temperature, and a battery system maximum temperature difference; and
judging whether the battery energy storage system needs to turn off the thermal management mode based on the second target feature, the thermal management mode, and the working mode.

11. The method according to claim 4, wherein
the thermal management method includes a self-cycling management.

12. A control device for a liquid cooling pipeline of a battery energy storage system, comprising:
a first monitoring module, for monitoring the battery energy storage system to obtain an working mode of the battery energy storage system and a first temperature of a plurality of battery cells of any one of battery clusters in the battery energy storage system;
a processing module, for determining a thermal management mode to be turned on for the battery energy storage system based on the first temperature and the working mode of the plurality of battery cells of each one of the battery clusters;
a first judgment module, for judging whether the battery energy storage system needs to perform a startup flow control; and
a processing module, in response to the battery energy storage system needs to perform a startup flow control, determining a target battery cluster based on the first temperature and the thermal management mode of the plurality of battery cells in each one of the battery clusters, and turning on a flow control valve of a liquid cooling pipeline branch corresponding to the target battery cluster.

13. An electronic device, including:
a memory, a processor and a computer program stored on the memory and capable of running on the processor, when the processor executes the computer program, the control method for the liquid cooling pipeline of the battery energy storage system as claimed in any one of claims 1-11 is implemented.
